# EUROPÄISCHE PATENTSCHRIFT

(11) **EP 0 872 981 B1**
(45) Veröffentlichungstag und Bekanntmachung des Hinweises auf die Patenterteilung: **17.11.2004**
(21) Anmeldenummer: 98201116.5
(22) Anmeldetag: 08.04.1998
(51) Int. Cl.: H04L 12/56, H04L 12/44, H04L 29/06, H04L 12/24

(54) **Übertragungssystem mit mehreren Netzelementen**
Communication system with multiple network elements
Système de communication avec plusieurs éléments de réseau

(30) Priorität: 14.04.1997 DE 19715396
(43) Veröffentlichungstag der Anmeldung: 21.10.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Helbig, Tobias, Dr., Röntgenstrasse 24, 22335 Hamburg (DE); Trossen, Dirk, Röntgenstrasse 24, 22335 Hamburg (DE)
(74) Vertreter: von Laue, Hanns-Ulrich, Dipl.-Ing.

(56) Entgegenhaltungen:
- EP-A- 0 423 053
- EP-A- 0 714 192
- US-A- 5 521 910
- L. DELGROSSI, L. BERGER: "Internet Stream Protocol Version 2 (ST2)" IETF, REQUEST FOR COMMENTS, [Online] Nr. 1819, August 1995 (1995-08), Seiten 1-108, XP002156800 Gefunden im Internet: <URL:http://www.ietf.org/rfc/rfc1819.txt> [gefunden am 2001-01-09]

## Beschreibung

Die Erfindung betrifft ein Übertragungssystem mit mehreren in hierarchischer, baumförmiger Struktur angeordneten Netzelementen und mit Mitteln zur Verwaltung und Zuweisung von Ressourcen an ein Netzelement.

Ein derartiges Übertragungssystem, das beispielsweise aus "A Primer on the T.120 Standard, DataBeam, 1995, S. 5 bekannt ist, wird beispielsweise zur Kommunikation und Datenübertragung in einem aus mehreren Benutzern bestehenden Netzwerk und/oder in verteilten Datenbanken benutzt. Das Management von Ressourcen in solchen verteilten Umgebungen, d.h. die Verwaltung, Zuweisung und Sperrung von Ressourcen, spielt eine entscheidende Rolle für die Schnelligkeit und Effizienz eines Übertragungssystems. Ressourcen sind beispielsweise im Übertragungssystem zur Verfügung stehende Rechte wie z.B. das Sprechrecht in einem Kommunikationssystem oder das Recht, irgendein Systemelement zu benutzen. Auch eine bestimmte Dienstgüte (quality of service) kann als Ressource betrachtet werden.

Die Infrastruktur von bekannten verteilten Übertragungssystemen ist hierarchisch und baumförmig organisiert. Ausgehend von einem Haupt-Netzelement, in dem der sog. oberste Dienstanbieter (top provider) lokalisiert ist, können Verbindungen eingerichtet werden zu weiteren Netzelementen, die in niedrigeren Hierarchiestufen angeordnet sind. Von den Netzelementen, in denen sog. Dienstanbieter (providers) lokalisiert sind, wird neben anderen Diensten die Funktionalität für die Verwaltung von Ressourcen im Übertragungssystem zur Verfügung gestellt. Ein Netzelement kann eine Ressource in Anspruch nehmen, sobald zwischen ihm und dem die Ressource verwaltenden Netzelement eine Verbindungen eingerichtet ist. Der Weg durch die so gebildete Baumstruktur von einem ersten Netzelement, das eine Ressource verwaltet, zu einem zweiten Netzelement, das die angebotene Ressource in Anspruch nimmt, wird als Ressourcenpfad (resource path) bezeichnet.

Die Zuweisung und der Besitz einer Ressource kann abstrakt beschrieben werden als die Zuweisung und der Besitz eines Markers (token). Bei bekannten Übertragungssystemen wird die Nummer eines Markers und der Besitzer durch geeignete Mittel im Übertragungssystem gespeichert. Im Falle einer verteilten Speicherung erfolgt die Speicherung in jedem Netzelement. Bei einer Veränderung des Zustandes einer Ressource, d.h. bei einer Veränderung des Besitzers eines Markers, bei einer Freigabe oder Vergabe eines Markers, kann dies zu einer Vielzahl von Aktualisierungsmeldungen zwischen allen Netzelementen und eventuell zu einem unterschiedlichen Stand der Information bei verschiedenen Netzelementen führen. Ein zentrale Speicherung der Informationen hat dagegen den Nachteil, daß jede Information bezüglich einer Ressource, z.B. die Anforderung einer Ressource, an das Haupt-Netzelement gerichtet und eventuell an das an anderer Stelle angeordnete zentrale Speicherelement weitergeleitet werden muß. In größeren Übertragungssystemen führt dies zu sehr langen Antwortzeiten auf eine Ressourcenanforderung und insgesamt zu einer Reduzierung der Effizienz des Übertragungssystems.

Die Internet-Veröffentlichung RFC 1819, IEFTF, August 1995 beschreibt ein Verfahren zum Aufbau und Verwalten von Datenströmen. Das Verfahren zielt darauf ab eine flexible Baumstrukrur aufzubauen, bei der Datenpakete kontinuierlich von der Wurzel eines Baumes bis zu den Blättern des Baumes übermittelt werden können.

EP 0714192 A1 beschreibt eine Verwaltung von Verbindungen in einem Switch mit dem Ziel Situation, bei denen eine Überlastung des Switches entsteht, zu vermeiden. Das Verfahren betrifft im Switch getroffene Entscheidung zur Weiterleitung der Pakete. Der Erfindung liegt deshalb die Aufgabe zugrunde, die Effizienz und die Übertragungsgeschwindigkeit eines eingangs genannten Übertragungssystems zu verbessern und die Verwaltung von Ressourcen zu vereinfachen.

Diese Aufgabe wird erfindungsgemäß dadurch gelöst, daß entlang eines von einem ersten Netzelement zu einem zweiten Netzelement reichenden Ressourcenpfades angeordnete Netzelemente Mittel zum Speichern des Verlaufs des Ressourcenpfades aufweisen.

Anders als bei bekannten Übertragungssystemen wird in den Netzelementen entlang eines Ressourcenpfades nicht der Besitzer (das Netzelement) einer Ressource selbst gespeichert, sondern nur, in welcher Verzweigung der nächstniedrigeren Hierarchiestufe das Netzelement zu finden ist, dem eine Ressource zugeordnet ist, d.h. in welcher Verzweigung der Ressourcenpfad verläuft. Eine zentrale Datenbank, in der die Zustände und die Besitzer sämtlicher Ressourcen gespeichert sind, kann entweder ganz entfallen oder einfacher ausgestaltet sein, da über die in den Netzelementen entlang eines Ressourcenpfades gespeicherten Informationen der Weg bis zu dem Netzelement gefunden werden kann, dem die Ressource zugeordnet ist. Die Anforderung einer Ressource kann deshalb schnell beantwortet werden, da diese Anforderung nicht in jedem Fall bis zu einer zentralen Datenbank weitergereicht und von dort beantwortet werden muß, sondern nur bis zu einem Netzelement, das genug Information über den Zustand der angeforderten Ressource hat. Außerdem muß auch die Information über die Änderung des Zustandes einer Ressource nur den Netzelementen entlang des Ressourcenpfades sowie gegebenenfalls dem zentralen Speicherelement mitgeteilt werden, nicht aber allen anderen Netzelementen. Dies führt letztlich zu einer erhöhten Effizienz und erhöhten Geschwindigkeit des Übertragungssystems.

Eine Weiterbildung der Erfindung sieht vor, daß die Netzelemente entlang des Ressourcenpfades jeweils eine Datenbank aufweisen, in der die Zustände der Ressourcen in den von ihnen abgehenden Verzweigungen der niedrigeren Hierarchiestufen gespeichert sind. Wird von einem Netzelement eine Ressource angefordert, die einem Netzelement in einem Nachbarzweig (Zweig, der von demselben Netzelement abzweigt wie der Zweig, in dem das anfordernde Netzelement angeordnet ist) zugeordnet ist, so kann die Anforderung leicht beantwortet werden, ohne daß eine zentrale Datenbank oder das Haupt-Netzelement eingeschaltet werden muß.

Die Erfindung wird bei Übertragungssystemen, beispielsweise bei Mehrpunkt-Kommunikationssystemen eingesetzt, bei denen mehrere Kommunikationsstationen hierarchisch vernetzt sind und ein Sender mit mehreren Empfängern kommunizieren kann. Als Ressourcen werden dabei beispielsweise Übertragungskanäle verwaltet.

Die Erfindung betrifft auch ein Netzelement gemäß Anspruch 5 und ein Ressourcenverwaltungssystem gemäß Anspruch 6. Das Ressourcenverwaltungssystem ist bevorzugt über das Übertragungssystem auf mehrere Netzelemente verteilt angeordnet.

Weiterhin betrifft die Erfindung auch ein Medium mit einem Ressourcenverwaltungssystem nach Anspruch 5, wie insbesondere eine CD-ROM, eine Diskette, eine Festplatte oder eine sonstige Speicheranordnung.

Die Erfindung wird nachfolgend anhand der Zeichnung näher erläutert. Es zeigen:
- Fig. 1: eine Skizze zur Verdeutlichung der Ressourcen-Verwaltung bei einem bekannten Übertragungssystem und
- Fig. 2: eine Skizze zur Verdeutlichung der Ressourcen-Verwaltung bei einem erfindungsgemäßen Übertragungssystem.

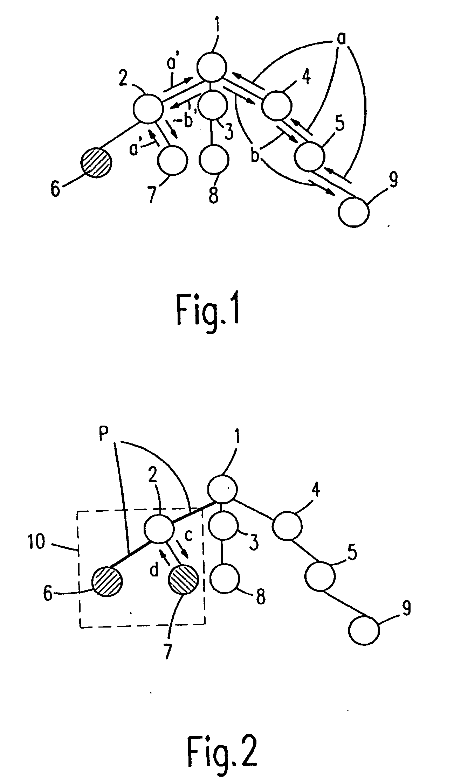

In Fig. 1 ist ein Übertragungssystem mit einem hierarchisch und baumförmig aufgebauten Netzwerk gezeigt. An oberster Stelle steht das Haupt-Netzelement (top provider) 1, das mit in der nächstniedrigeren Hierarchiestufe angeordneten Netzelementen (providers) 2, 3, 4 in Verbindung steht. In der nächstniedrigeren Hierarchiestufe und in einem Fall noch einer weiteren Hierarchiestufe sind den einzelnen Netzelementen 2, 3, 4 wiederum ein oder mehrere Netzelemente 5, 6, 7, 8, 9 zugeordnet. Fig. 1 zeigt der Einfachheit halber nur eine simple Struktur, ein reelles Übertragungssystem kann beliebig größer und komplexer aufgebaut sein.

Wenn das Netzelement 9 eine Ressource anfordert, die gerade dem Netzelement 6 zugewiesen ist, wird bei dem bekannten Übertragungssystem mit zentraler Ressourcen-Verwaltung die Anforderung an das Haupt-Netzelement 1 weitergereicht (symbolisch durch Pfeile a dargestellt), wo die Information über den Zustand und den Besitzer der Ressource gespeichert ist, was als Antwort an das Netzelement 9 zurückgemeldet wird (Pfeile b). Auch wenn das Netzelement 7 eine dem Netzelement 6 zugewiesene Ressource anfordert, wird diese Anforderung bis zum . Haupt-Netzelement 1 weitergereicht (Pfeile a') und von dort beantwortet (Pfeile b').

Als anschauliches Beispiel kann das in Fig. 1 gezeigte Übertragungssystem als Kommunikationssystem zwischen mehreren Benutzern (Netzelementen) betrachtet werden, in dem immer nur eine Person sprechen kann. Die Sprecherlaubnis repräsentiert dabei eine Ressource, die ausschließlich dem Sprecher zugewiesen ist. Wenn eine Person die Erlaubnis zum Sprechen erhält, so erhält das zugehörige Netzelement einen Marker, um die Sprecherlaubnis anzuzeigen. Wenn eine andere Person sprechen möchte, muß zunächst in Haupt-Netzelement der derzeitige Besitzer des Markers erfragt werden, um dann von diesem die Sprecherlaubnis anzufordern. Danach wird der Marker an den neuen Sprecher weitergegeben, der damit die Erlaubnis zum Sprechen innehat.

Anhand der Fig. 2 soll die Verwaltung von Ressourcen gemäß der Erfindung erläutert werden. Zunächst ist eine Ressource ausschließlich dem Netzelement 6 zugewiesen. In einer Datenbank im Haupt-Netzelement 1 ist vermerkt, daß diese Ressource in der linken Verzweigung einem Netzelement zugewiesen ist, also nicht frei verfügbar ist. Der Besitzer der Ressource, also dessen Bezeichnung oder dessen Nummer, ist in der Datenbank nicht vermerkt. In einer Datenbank im Netzelement 2 ist vermerkt, daß diese Ressource in der linken Verzweigung einem Netzelement zugewiesen ist. Da das Netzelement 6 in der untersten Hierarchiestufe entlang des Ressourcenpfades P liegt, der vom Netzelement 1 über das Netzelement 2 bis zum Netzelement 6 führt, also die Verbindungen von Netzelement 1 zu Netzelement 2 und diesem zum Netzelement 6 umfaßt, kann mittels der Informationen der Datenbanken der Netzelemente 1 und 2 der Besitzer der Ressource identifiziert werden. Zusätzlich kann auch im Netzelement 6 die Information gespeichert sein, daß das Netzelement 6 der Besitzer der Ressource ist.

Wenn das Netzelement 7 die Ressource anfordert, muß diese Anforderung nur bis an das Netzelement 2 weitergereicht werden (Pfeil c), da bereits dort ausreichend Informationen zum Auffinden des Besitzers der Ressource vorhanden sind und deshalb die Anforderung beantwortet werden kann (Pfeil d). Wird die Ressource nun vom Netzelement 6 freigegeben und dem Netzelement 7 zugewiesen, verändert sich also der Zustand der Ressource nicht, braucht auch die Datenbank des Haupt-Netzelements 1 nicht aktualisiert werden, das der bisherige Eintrag für die Ressource ("zugewiesen im linken Ast") weiterhin Gültigkeit hat. Auch wenn die Ressource nicht-ausschließlich, d.h. mehreren Netzelement gleichzeitig zugewiesen wäre, beispielsweise den beiden Netzelementen 6 und 7, müßte die Datenbank des Haupt-Netzelements 1 nicht aktualisiert werden, sondern nur die Datenbank des Netzelements 2.

Die gesamte in Fig. 2 gezeigte Struktur wird auch als Domäne (domain) bezeichnet, die in weitere Subdomänen (subdomains), beispielsweise die Ressourcen-Subdomäne (resource subdomain) 10 unterteilt werden kann, die die Netzelemente 2, 6 und 7 umfaßt. Das Haupt-Netzelement 2 einer solchen Subdomäne 10 wird auch als Ressourcen-Hauptelement (resource top provider) bezeichnet. Solange der Besitzer einer Ressource also nur innerhalb einer Subdomäne wechselt, führt dies auch nicht zu Zustandsänderungen außerhalb der Subdomäne; diese Besitzeränderungen sind außerhalb der Subdomäne auch nicht unmittelbar sichtbar.

Wenn das Netzelement 9 den Zustand der dem Netzelement 6 zugewiesenen Ressource wissen will, kann diese Information vom Haupt-Netzelement 1 abgefragt werden, in dem der Ressource gespeichert ist. Fordert das Netzelement 9 diese Ressource an, so wird die Anforderung über das Haupt-Netzelement 1 an das Netzelement 6 weitergeleitet, wobei der Weg dort hin mittels der in den Netzelementen 1, 2 entlang des Ressourcenpfades P enthaltenen Information gefunden wird.

Als anschauliches Beispiel könnten die Netzelemente 2, 6, 7 als in den USA befindliche Rechner betrachtet werden, während alle übrigen Netzelemente in Europa befindliche Rechner symbolisieren. An den Netzelementen 6 und 7 sitzen Kommunikationspartner, die abwechselnd sprechen, während an allen anderen Netzelementen passiv zuhörende Kommunikationspartner sitzen. Ein Marker, der das Sprechrecht repräsentiert, wird zwischen den Netzelementen 6 und 7 hin und her gereicht, also nur innerhalb der USA. Auch die Verwaltungsinformation darüber muß nur an das Netzelement 2 weitergereicht werden, ist also ebenfalls lokal auf die in den USA befindlichen Rechner beschränkt. Die Weiterreichung der Verwaltungsinformation zu den in Europa befindlichen Rechner ist nicht erforderlich, was die Verwaltung schneller und billiger macht.

Durch die Erfindung können kürzere Antwortzeiten auf Ressourcen-Anforderungen in Übertragungssystemen mit einem hierarchisch und baumförmig aufgebauten Netzwerk erreicht werden. Auch die Belastung des Übertragungssystems durch den Aufbau von Verbindungen, die Belastung von Übertragungswegen und die Aktualisierung von Datenbanken kann durch die Erfindung reduziert werden, was ingesamt zu einer höheren Effizienz des Übertragungssystems führt. Die Erfindung kann beispielsweise bei Kommunikationssystemen eingesetzt werden. Ein Beispiel für einen Kommunikationsservice ist ein Standard, der innerhalb der ITU-T T. 120 Standardserie definiert ist. Dieser Kommunikationsservice bietet Übertragungskanäle und Marker, wie sie oben beschrieben sind, als Ressourcen innerhalb einer hierarchischen Struktur an. Die Verwaltung der Ressourcen ist als zentrale Datenbank realisiert, die in dem Haupt-Netzelement der Struktur angeordnet ist.

## Patentansprüche

1. Übertragungssystem mit mehreren in hierarchischer, baumförmiger Struktur angeordneten Netzelementen (1 bis 9) und mit Mitteln zur Verwaltung und Zuweisung von Ressourcen an ein Netzelement (1 bis 9),
**dadurch gekennzeichnet, daß** entlang eines von einem ersten Netzelement (1) zu einem zweiten Netzelement (6) reichenden Ressourcenpfades (P) angeordnete Netzelemente (1, 2) Mittel zum Speichern des Verlaufs des Ressourcenpfades (P) aufweisen.

2. Übertragungssystem nach Anspruch 1,
**dadurch gekennzeichnet, daß** die Netzelemente (1, 2) entlang des Ressourcenpfades (P) jeweils eine Datenbank aufweisen, in der die Information, in welcher Verzweigung der nächstniedrigeren Hierarchiestufe der Ressourcenpfad (P) verläuft, gespeichert ist.

3. Übertragungssystem nach Anspruch 1,
**dadurch gekennzeichnet, daß** die Netzelemente (1, 2) entlang des Ressourcenpfades (P) jeweils eine Datenbank aufweisen, in der die Zustände der Ressourcen in den von ihnen abgehenden Verzweigungen der niedrigeren Hierarchiestufen gespeichert sind.

4. Netzelement für ein Übertragungssystem mit mehreren in hierarchischer, baumförmiger Struktur angeordneten Netzelementen (1 bis 9) und mit Mitteln zur Verwaltung und Zuweisung von Ressourcen an ein Netzelement (6),
**dadurch gekennzeichnet, daß** ein entlang eines von einem ersten Netzelement (1) zu einem zweiten Netzelement (6) reichenden Ressourcenpfades (P) angeordnetes Netzelement (1, 2) Mittel zum Speichern des Verlaufs des Ressourcenpfades (P) aufweist.

5. Ressourcenverwaltungssystem zur Verwaltung und Zuweisung von Ressourcen an ein Netzelement (6) in einem Übertragungssystem mit mehreren in hierarchischer, baumförmiger Struktur angeordneten Netzelementen (1 bis 9),
**dadurch gekennzeichnet, daß** entlang eines von einem ersten Netzelement (1) zu einem zweiten Netzelement (6) reichenden Ressourcenpfades (P) angeordnete Netzelemente (1, 2) Mittel zum Speichern des Verlaufs des Ressourcenpfades (P) aufweisen.

6. Speichermedium mit einem Ressourcenverwaltungssystem nach Anspruch 5.

## Claims

1. A transmission system which comprises a plurality of network elements (1 to 9) which are arranged in a hierarchical tree structure and means for the management and allocation of resources to a network element (1 to 9),
**characterized in that** network elements (1, 2) which are arranged along a resource path (P) extending from a first network element (1) to a second network element (6) include means for storing the course of the resource path (P).

2. A transmission system as claimed in Claim 1,
**characterized in that** the network elements (1, 2) along the resource path (P) each include a respective database which stores the information as to in which branch of the next lower hierarchical level the resource path (P) extends.

3. A transmission system as claimed in Claim 1,
**characterized in that** the network elements (1, 2) along the resource path (P) each include a respective database in which the states of the resources in the branches emanating therefrom at lower hierarchical levels are stored.

4. A network element for a transmission system which comprises a plurality of network elements (1 to 9) which are arranged in a hierarchical tree structure and means for the management and allocation of resources to a network element (6),
**characterized in that** a network element (1, 2) which is arranged along a resource path (P) extending from a first network element (1) to a second network element (6) includes means for storing the course of the resource path (P).

5. A resource management system for the management and allocation of resources to a network element (6) in a transmission system which comprises a plurality of network elements (1 to 9) which are arranged in a hierarchical tree structure,
**characterized in that** network elements (1, 2) which are arranged along a resource path (P) extending from a first network element (1) to a second network element (6) include means for storing the course of the resource path (P).

6. A storage medium provided with a resource management system as claimed in Claim 5.

## Revendications

1. Système de transmission avec plusieurs éléments de réseau (1 à 9) disposés dans une structure hiérarchique et arborescente et avec des moyens de gestion et d'attribution des ressources à un élément de réseau (1 à 9),
**caractérisé en ce que** des éléments de réseau (1, 2) disposés le long d'un trajet de ressource (P) allant d'un premier élément de réseau (1) à un deuxième élément de réseau (6) présentent des moyens d'enregistrement du tracé du trajet de ressource (P).

2. Système de transmission selon la revendication 1, **caractérisé en ce que** les éléments de réseau (1, 2) présentent respectivement le long du trajet de ressource (P) une base de données dans laquelle est enregistrée l'information quant à la branche de l'étage hiérarchique immédiatement inférieur du trajet de ressource (P).

3. Système de transmission selon la revendication 1, **caractérisé en ce que** les éléments de réseau (1, 2) présentent respectivement le long du trajet de ressource (P) une base de données dans laquelle sont enregistrés les états des ressources dans les branches qui partent de celui-ci des étages hiérarchiques inférieurs.

4. Elément de réseau pour un système de transmission avec plusieurs éléments de réseau (1 à 9) disposés en une structure hiérarchique arborescente et avec des moyens de gestion et d'attribution des ressources à un élément de réseau (6) **caractérisé en ce qu'**un élément de réseau (1, 2) disposé le long d'un trajet de ressource (P) allant d'un premier élément de réseau (1) à un deuxième élément de réseau (6) présente des moyens pour l'enregistrement du tracé du trajet de ressource (P).

5. Système de gestion des ressources pour la gestion et l'attribution des ressources à un élément de réseau (6) dans un système de transmission avec plusieurs éléments de réseau (1 à 9) disposés dans une structure hiérarchique arborescente, **caractérisé en ce que** des éléments de réseau (1, 2) disposés le long d'un trajet de ressource (P) allant d'un premier élément de réseau (1) à un deuxième élément de réseau (6) présentent des moyens pour l'enregistrement du tracé du trajet de ressource (P).

6. Moyen d'enregistrement avec un système de gestion des ressources selon la revendication 5.
